# EUROPÄISCHE PATENTSCHRIFT

(11) **EP 3 043 877 B1**
(45) Veröffentlichungstag und Bekanntmachung des Hinweises auf die Patenterteilung: **12.09.2018**
(21) Anmeldenummer: 14816150.8
(22) Anmeldetag: 05.12.2014
(51) Int. Cl.: A63C 17/01, A63C 17/12, A63C 17/24

(54) **FAHRZEUG FÜR DIE FORTBEWEGUNG EINES FAHRERS MIT EINER AUF EINEM BODEN UND IN BELIEBIGE RICHTUNGEN ABROLLENDEN KUGEL**
VEHICLE FOR THE MOVEMENT OF A DRIVER COMPRISING A BALL ROLLING ON A GROUND SURFACE AND IN ANY DESIRED DIRECTION
VÉHICULE POUR LE DÉPLACEMENT D'UN CONDUCTEUR, COMPRENANT UNE SPHÈRE QUI ROULE AU SOL ET DANS DES DIRECTIONS QUELCONQUES

(30) Priorität: 06.12.2013 DE 102013113643; 03.06.2014 DE 102014107763
(43) Veröffentlichungstag der Anmeldung: 20.07.2016
(73) Patentinhaber: Innovated Transport Systems UG Haftungsbeschränkt, 45130 Essen (DE)
(72) Erfinder: SAMBETH, Ulrich, 45149 Essen (DE)
(74) Vertreter: Moser Götze & Partner Patentanwälte mbB
(86) Internationale Anmeldenummer: PCT/EP2014/076770
(87) Internationale Veröffentlichungsnummer: WO 2015/082705

(56) Entgegenhaltungen:
- JP-A- 2004 129 435
- NL-C2- 1 033 676
- US-A1- 2008 242 515

## Beschreibung

Die Erfindung betrifft ein Fahrzeug für die Fortbewegung eines Fahrers mit einem auf einem Boden abrollenden Element, mit einem sich auf dem abrollenden Element labil abstützenden Tragelement, mit einer sich an dem Tragelement abstützenden Antriebsanordnung, die das abrollende Element antreibt und mit einer Steuerung, über die die Antriebsanordnung in Abhängigkeit von der Neigung des Tragelements und der Neigungsrichtung des Tragelements in einer gewünschten Fahrtrichtung gesteuert ist, wobei das Fahrzeug mit dem Tragelement derart ausgebildet ist, dass der Fahrer im Betrieb des Fahrzeuges frei und balancierend auf dem Tragelement steht.

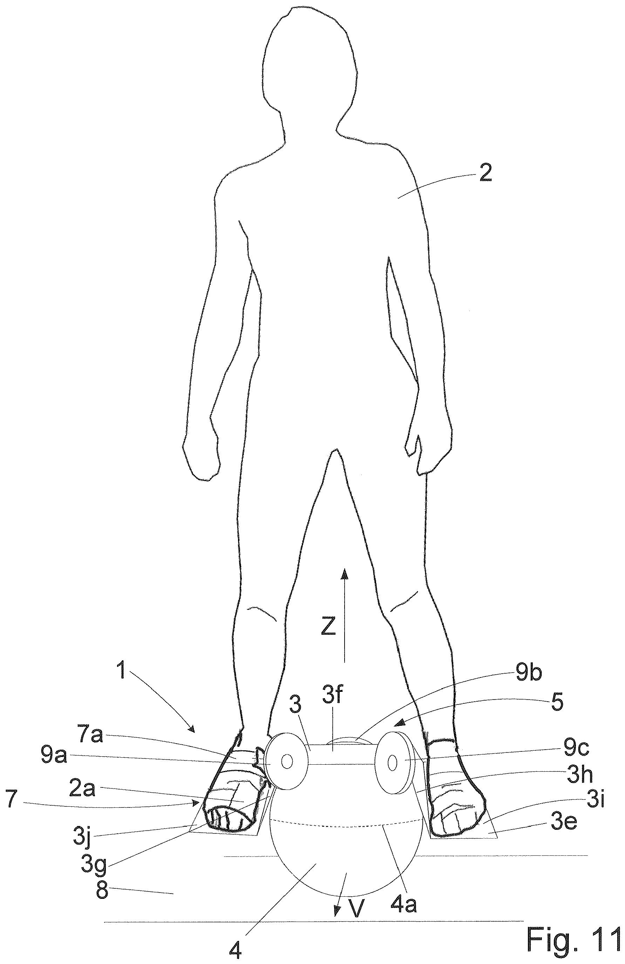

Aus der europäischen Patentschrift EP 1 181 187 B1 ist bereits ein Transporter für eine Person bekannt, der als mobile Arbeitsplattform, Freizeitfahrzeug, Golfwagen oder Lieferfahrzeug verwendet werden kann. Im Wesentlichen besteht dieser Transporter aus einer Plattform, auf dem der Fahrer steht, und einem lenkerartigen Griff, der zentral auf der Plattform angeordnet ist. An dem Griff können Bedienelemente für den Transporter angeordnet sein. Die Plattform ist über ein oder mehrere Räder auf einem Boden verfahrbar und in Bezug auf das beziehungsweise die Räder labil gelagert. Die Räder sind hierbei zwischen, unter oder neben den Beinen des Fahrers angeordnet. Ein Antrieb der Räder erfolgt über Elektromotoren, die in Zusammenarbeit mit einer Steuerung einerseits die Plattform in Bezug auf die Räder ausbalancieren und andererseits ein Kippen der Plattform durch den Fahrer in Befehle für einen Antrieb der Räder in die entsprechende Kipprichtung umsetzt. Ein Umfang der Kippbewegung kann auch als Maß einer Beschleunigung ausgewertet werden. In einer Ausführungsform kommt anstatt einem oder mehreren Rädern eine Kugel zum Einsatz, die dann Fahrbewegungen in x- und y-Richtung ermöglicht. In dort in den Figuren 11 bis 13 gezeigten weiteren Ausführungsformen mit einem einzelnen Rad wird auf den lenkerartigen Griff verzichtet und der Fahrer steht frei balancierend auf einer skateboardartigen Plattform. Hierbei befinden sich die Füße in Abrollrichtung des Rades gesehen rechts und links neben dem Rad oder vor und hinter dem Rad. Bei der Fußstellung vor und hinter dem Rad weisen in einer Ausführung die Fußspitzen in Abrollrichtung und in der anderen Ausführung quer zur Abrollrichtung.

Des Weiteren beschreibt die niederländische Offenlegungsschrift NL 103 36 76 einen Kugelroller für die Fortbewegung eines stehenden Fahrers. Auch dieser Kugelroller besteht im Wesentlichen aus einer Kugel in Radfunktion, einer Plattform für den Fahrer und einem lenkerartigen Griff. Ein Antrieb der Kugel erfolgt über sechs angetriebene Allseitenräder.

Ferner zeigt die schweizerische Offenlegungsschrift CH 511 034 A ein Trainings- bzw. Spielgerät mit einem elastischen Ball, an dem ein als Aufstandsfläche für den Benutzer dienender umlaufender Ring befestigt ist. Zusätzlich sind in dem Bereich des Balles zwei gegenüberliegende Laschen vorgesehen, unter die der Benutzer seine Füße schieben kann. Dieses Trainings- bzw. Spielgerät ist dafür vorgesehen, dass sich der Benutzer damit hüpfend fortbewegt. In der britischen Offenlegungsschrift GB 2 4007 780 A wird ein Surf- bzw. Balanceboard gezeigt, das in der Mitte eine auf dem Boden abrollende Kugel aufweist. Um den Fahrer bei der Benutzung des Boards zu unterstützen, sind an dem vorderen und hinteren Ende weitere Rollen angeordnet. Das gleiche Board kann auch stationär als sogenanntes Balanceboard verwendet werden. Dann ist an der Unterseite des Boards eine Halbkugel vorgesehen, die in einem auf einem Boden angeordneten Tragring eingreift. Das Board ist nicht angetrieben. Auch offenbart die amerikanische Offenlegungsschrift US 3 604 726 A ein Trainings- bzw. Spielgerät, das vergleichbar mit dem vorbeschriebenen Board ist, wobei dort die Aufstandsfläche als kreisrunde Ringscheibe ausgebildet ist. Die japanische und die internationale Offenlegungsschrift JP 2001-163 277 A und WO 98/31 583 A1 befassen sich mit dem Antrieb von Kugeln. Das US-Patent US 8 418 705 B2 betrifft einen Gehstock, an dessen unterem Ende ein Rad befestigt ist, das im Zusammenhang mit der Neigung des Gehstockes angetrieben wird. In dem US-Patent US 7 467 681 B2 ist ein weiteres Board dargestellt, das angetrieben ist. Hier kommt jedoch eine zentral angeordnete Rolle zum Antrieb zum Einsatz. In dem deutschen Patent DE 26 57 187 B2 ist ein Kreiselsystem mit einer Kreiselschwungmasse beschrieben, dass beispielsweise eingesetzt werden kann, um bei Kraftfahrzeugen Schwenkbewegungen bei Kurvenfahrten auszugleichen oder bei Kranen als Gegengewicht zu dienen. Die US-Offenlegungsschrift US 2005/0 134 106 A1 betrifft ein Allseitenrad.

Auch offenbart die Offenlegungsschrift JP 2004 129435 A ein weiteres angetriebenes Fahrzeug mit einer skateboardartigen Plattform für einen Fahrer. Die Plattform rollt über eine zentral angeordnete Kugel auf einem Boden ab. Hierzu ist die Kugel in einem Gehäuse gelagert, das unterhalb der Plattform angeordnet ist. Die Kugel ragt von unten in das Gehäuse hinein. Die Plattform für den Fahrer und somit auch die Aufstandsflächen für die Füße des Fahrers befinden sich oberhalb der Kugel.

Hiervon ausgehend liegt der vorliegenden Erfindung die Aufgabe zu Grunde, ein besonders einfaches Fahrzeug für die Fortbewegung eines Fahrers mit einem auf einem Boden abrollenden Element zu schaffen.

Diese Aufgabe wird durch ein Fahrzeug für die Fortbewegung eines Fahrers mit einem auf einem Boden abrollenden Element mit den Merkmalen des Anspruches 1 gelöst. Vorteilhafte Ausgestaltungen der Erfindung sind in den Ansprüchen 2 bis 17 angegeben.

Erfindungsgemäß wird ein besonders einfaches Fahrzeug für die Fortbewegung eines Fahrers mit einem auf einem Boden abrollenden Element, mit einem sich auf dem abrollenden Element labil abstützenden Tragelement, mit einer sich an dem Tragelement abstützenden Antriebsanordnung, die das abrollende Element antreibt und mit einer Steuerung, über die die Antriebsanordnung in Abhängigkeit von der Neigung des Tragelements und der Neigungsrichtung des Tragelements in einer gewünschten Fahrtrichtung gesteuert ist, dadurch geschaffen, dass das auf dem Boden abrollende Element eine Kugel ist und über die Antriebsanordnung das Fahrzeug in beliebige Richtungen bewegbar ist und der Fahrer ausschließlich über seine Füße und gegebenenfalls zusätzlich über seine Unterschenkel im Kontakt mit dem Fahrzeug steht, wobei in dem Tragelement eine Öffnung angeordnet ist und die Kugel in die Öffnung des Tragelements hinein ragt. Im Zusammenhang mit der Erfindung wird unter Fuß und Unterschenkel der Bereich unterhalb des Knies bis zur Fußsohle beziehungsweise Fußspitze einschließlich des Sprunggelenks verstanden. Vorzugsweise erfolgt neben dem Fuß ein zusätzlicher Kontakt mit einer oder beiden Waden. Das Fahrzeug zeichnet sich insbesondere durch eine einfache Konstruktion aus. Außerdem kann es einfach durch Gewichtsverlagerung des balancierenden Fahrers, der dadurch den Grad der Neigung des Tragelements und der Neigungsrichtung ausgehend von einer ausbalancierten vorzugsweise horizontalen Ausrichtung des Tragelements ändert, gesteuert werden. Solange der Fahrer durch die Gewichtsverlagerung eine Neigung hervorruft, bewegt sich das Fahrzeug in diese Richtung. Der Fahrer steuert das Fahrzeug also über Gewichtsverlagerung. Außerdem hat die Verwendung der Kugel den Vorteil, dass Fahrzeug auf dem Boden in alle beliebigen Richtungen bewegt werden kann in Kombination mit einem Ausbalancieren des Gesamtsystems (Mensch-Fahrzeug). Dieses Fahrzeug eignet sich insbesondere als Sportgerät, Freizeitgerät oder Fungerät. In diesem Zusammenhang ist in beliebige Fahrrichtungen bewegbar so zu verstehen, dass die Fahrtrichtung des Fahrzeugs von der Blickrichtung des Fahrer entkoppelt ist, d.h. der Fahrer kann sich bei vorgegebener Blickrichtung in alle Fahrrichtungen relativ hierzu bewegen. Außerdem wird das erfindungsgemäße Fahrzeug skateboardartig betrieben, da der Fahrer frei balancierend auf dem Tragelement steht. Dem Fahrer stehen keine Hilfsmittel wie Lenkstange, eine Stütze oder einen Sitz zum Abstützen beziehungsweise als Hilfe beim Balancieren zur Verfügung. Vorzugsweise steht der Fahrer einfach im Bereich der Aufstandsflächen auf dem Tragelement. Um die Neigungskräfte von dem Fahrer leichter auf das Tragelement zu übertragen und den Stand des Fahrers auf dem Tragelement zu verbessern, kann der Fuß mit Schlaufen, Vorsprüngen, Vertiefungen oder ähnlichen Mitteln seitlich geführt werden. Diese Führungselemente können auch nach oben in den Bereich des Unterschenkels vorzugsweise der Wade verlängert werden. Über den zusätzlichen Kontakt mit der Seite und/oder Rückseite der Wade kann der Fahrer das Fahrzeug feinfühlig steuern. Alle diese Unterstützungshilfen sind vorzugsweise in einer Richtung offen, damit der Fahrer sich bei Bedarf leicht heraus bewegen kann. Eine labile Aufhängung beziehungsweise Abstützung des Tragelementes an der Kugel wird besonders einfach dadurch erreicht, dass die Kugel in die Öffnung des Tragelements hinein ragt.

Besonders vorteilhaft ist vorgesehen, dass das Fahrzeug in Bezug auf den Fahrer haltegrifflos ist. Der Fahrer kann somit auf dem Tragelement des Fahrzeugs frei balancieren ohne sich mit den Händen an einer Stütze oder an einer Lenkstange abzustützen oder auf einen auf dem Tragelement angeordneten Sattel oder Sitz zu sitzen . In diesem Zusammenhang ist ein Haltegriff dahingehend zu verstehen, dass ein auf dem Tragelement balancierender Fahrer sich hieran mit einer oder beiden Händen während der Fahrt abstützen könnte. Ein Tragegriff an dem Tragelement zum Transport des Fahrzeuges wäre somit kein Haltegriff, da dieser von einem stehenden Fahrer nicht erreichbar ist.

Vorteilhafter Weise ist das Tragelement als ringförmige Scheibe ausgebildet ist und das Tragelement hat einen kreisrunden, ovalen oder rechteckigen Rand oder Kombinationen hiervon. Durch die ringförmige Ausgestaltung des Tragelements wird das Auf- und Absteigen auf das Fahrzeug erleichtert, da bei horizontal ausgerichteter Scheibe und horizontalem Boden in jeder Kipprichtung der Abstand zum Boden gleich ist.

Eine in Bezug auf die Schwierigkeit mittlere Balancierbarkeit der Fahrzeugs wird dadurch erreicht, dass die ringförmige Scheibe des Tragelements im Bereich der Höhe eines horizontalen Äquators der Kugel angeordnet ist.

In einer alternativen Ausgestaltung ist das Tragelement in Vorwärtsfahrtrichtung des Fahrzeugs gesehen trapezblechförmig. Die Ringform des Tragelements wird somit auf die Aufstandsflächen für die Füße reduziert und wird somit kompakter und leichter transportierbar. Durch die Reduktion auf die Aufstandsflächen sind diese über einen Steg zu verbinden, der über der Kugel verläuft.

Außerdem ist vorgesehen, dass auf dem Tragelement Aufstandsflächen für den Fahrer angeordnet sind und die Aufstandsflächen in Bezug auf die Kugel gegenüber liegend angeordnet sind. Hierdurch wird eine gute Balancierbarkeit des Fahrzeugs erreicht, da sich die Kugel zwischen den Beinen des frei stehenden Fahrers befindet.

Besonders vorteilhaft ist vorgesehen, dass die Aufstandsflächen für den Fahrer im Bereich der Höhe eines horizontalen Äquators der Kugel angeordnet sind.

Konstruktiv besonders vorteilhaft ist, dass die Antriebsanordnung an dem Tragelement befestigt ist und die Antriebsanordnung mindestens zwei Allseitenräder mit einer Drehachse zur Übertragung der Antriebskräfte auf die Kugel aufweist. Hierbei ist die Drehachse parallel zu dem Tragelement ausgerichtet.

Die Antriebskräfte können besonders gut in die Kugel eingeleitet werden, wenn drei Allseitenräder auf dem Tragelement angeordnet sind und gleichmäßig um die Kugel herum verteilt sind.

Eine Stabilisierung des Tragelements zu der Kugel und eine Drehmöglichkeit des Tragelements zu der Kugel wird dadurch erreicht, dass die Antriebsanordnung mindestens ein Allseitenrad mit einer Drehachse aufweist, dessen Drehachse parallel zur Hochachse der Kugel bei horizontal ausgerichtetem Tragelement ist, und das mindestens eine Allseitenrad auf der Höhe eines horizontalen Äquators an der Kugel angreift.

In einer bevorzugten Ausführungsform ist vorgesehen, dass die Antriebsanordnung ein viertes Allseitenrad und ein fünftes Allseitenrad jeweils mit einer Drehachse parallel zur Hochachse der Kugel bei horizontal ausgerichtetem Tragelement, die in Bezug auf die Kugel gegenüber liegend an dem Tragelement angeordnet sind.

In einer alternativen Ausgestaltung ist vorgesehen, dass mindestens eine der Drehachsen ausgehend von einer vertikalen Stellung in Richtung der Kugel geneigt ist. Hierdurch kann vorteilhafter Weise auf die Allseitenräder zur Bewegung des Tragelements um die z-Achse verzichtet werden.

Besonders vorteilhaft ist vorgesehen, dass bei einer Bewegung des Fahrzeuges in Vorwärtsfahrtrichtung das vierte Allseitenrad und das fünfte Allseitenrad im Bereich einer Rollachse an die Kugel angreifen.

Zur Bestimmung der Lage des Tragelements im Raum sind an dem Tragelement Kreisel angeordnet sind, mit denen der Grad der Neigung und Neigungsrichtung des Tragelements messbar sind und die gemessene Neigung und Neigungsrichtung an die Steuerung übergeben wird.

Vorteilhafter Weise ist vorgesehen, dass die Steuerung ein Balance-Steuerungsmodul umfasst, das einen Fahrer bei der Ausbalancierung des Tragelements in einer horizontale Lage im Raum unterstützt. Diese Ausbalancierung des Tragelementes in eine ausbalancierte Ausrichtung erfolgt über eine entsprechende Ansteuerung des ersten, zweiten und dritten Allseitenrades. Der Grad der Unterstützung kann variiert werden und so groß eingestellt werden, dass es für den Fahrer relativ einfach ist auf dem Tragelement zu balancieren. Andererseits ist die Unterstützung nicht so groß, dass der Fahrer daran gehindert wird, durch ein Verlagern seines Gewichts nach Art eines Gaspedals eine Beschleunigung des Fahrzeugs in die Neigungsrichtung auf Grund der Gewichtsverlagerung hervor zu rufen.

Nachfolgend wird die Erfindung an Hand eines in einer Zeichnung dargestellten Ausführungsbeispiels näher erläutert. Es zeigen:
Figur 1 eine perspektivische Prinzip-Ansicht eines erfindungsgemäßen Fahrzeugs für die Fortbewegung eines Fahrers in einer ersten Ausführungsform,
Figur 2 eine Draufsicht auf das Fahrzeug gemäß Figur 1 ohne Fahrer,
Figur 3 eine Ansicht des Fahrzeuges gemäß Figur 2 von unten,
Figur 4 ein Prinzipschaltbild der Steuerung des Fahrzeuges,
Figur 5 eine perspektivische Prinzip-Ansicht eines erfindungsgemäßen Fahrzeugs für die Fortbewegung eines Fahrers in einer zweiten Ausführungsform,
Figur 6 eine Draufsicht auf das Fahrzeug gemäß Figur 5 ohne Fahrer,
Figur 7 eine Ansicht des Fahrzeuges gemäß Figur 6 von unten,
Figur 8 ein Prinzipschaltbild der Steuerung des Fahrzeuges,
Figur 9 eine perspektivische Prinzip-Ansicht eines erfindungsgemäßen Fahrzeugs für die Fortbewegung eines Fahrers in einer dritten Ausführungsform,
Figur 10 eine Draufsicht auf das Fahrzeug gemäß Figur 9 ohne Fahrer,
Figur 11 eine perspektivische Prinzip-Ansicht eines erfindungsgemäßen Fahrzeugs für die Fortbewegung eines Fahrers in einer vierten Ausführungsform,
Figur 12 eine Draufsicht auf das Fahrzeug gemäß Figur 11 ohne Fahrer,
Figur 13 eine perspektivische Prinzip-Ansicht eines erfindungsgemäßen Fahrzeugs für die Fortbewegung eines Fahrers in einer fünften Ausführungsform und
Figur 14 eine Draufsicht auf das Fahrzeug gemäß Figur 13 ohne Fahrer.

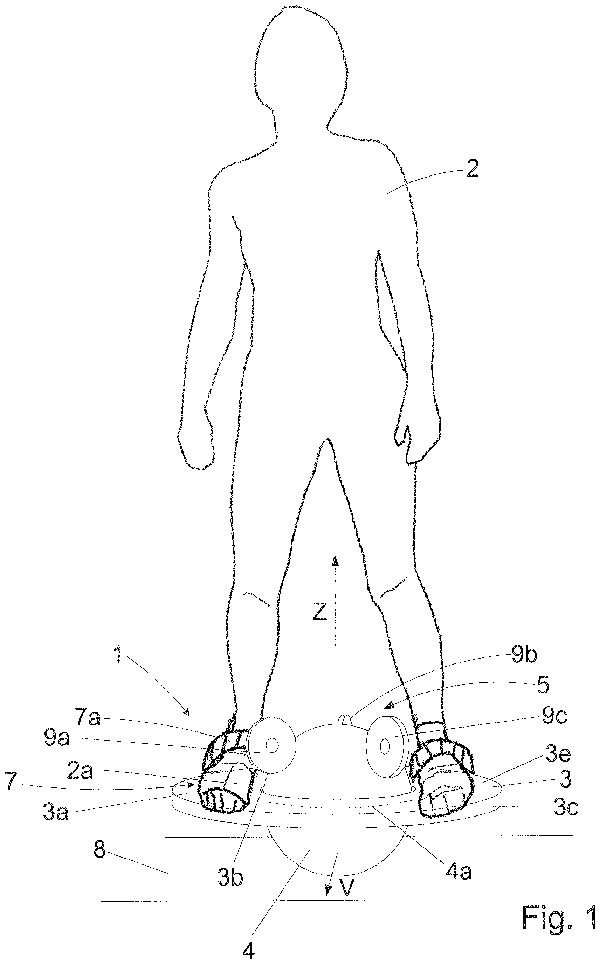

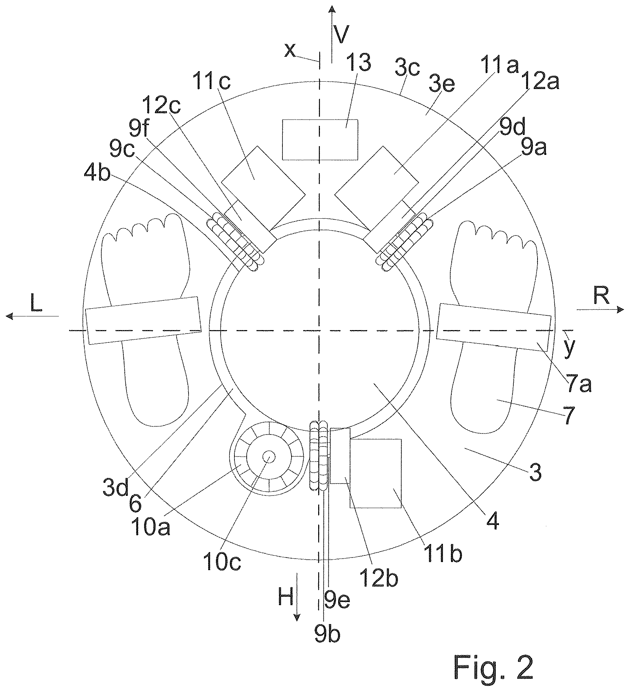

In der Figur 1 ist eine perspektivische Prinzip-Ansicht eines erfindungsgemäßen Fahrzeugs 1 für die Fortbewegung eines Fahrers 2 in einer ersten Ausführungsform dargestellt. Das Fahrzeug 1 besteht im Wesentlichen aus einem Tragelement 3, einem auf einem Boden 8 abrollenden Element in Form einer Kugel 4 und einer Antriebsanordnung 5. Von der Antriebsanordnung 5 sind nur schematisch drei Allseitenräder 9a, 9b und 9c dargestellt. Ein viertes Allseitenrad 10 ist von der Kugel 4 verdeckt und in Figur 2 gezeigt. Das Tragelement 3 ist als ringförmige Scheibe 3a mit einer zentralen kreisrunden Öffnung 3b und einen äußeren kreisrunden Rand 3c ausgebildet. Außerdem ist das Tragelement 3 als Platte beziehungsweise Blech ausgebildet, so dass die Höhe eines horizontal ausgerichteten Tragelements 3 einem Bruchteil der Höhe der Kugel 4 entspricht. Grundsätzlich ist es auch denkbar, dass das Tragelement 3 nicht nur einen kreisrunden Rand 3c sondern auch einen ovalen, rechteckigen oder mehreckigen Rand 3c oder Kombinationen hiervon hat. Entsprechendes gilt für die Öffnung 3b. Insgesamt hat die kreisrunde Form des Tragelements 3 jedoch den Vorteil, dass der Fahrer 2 das Tragelement 3 am Ende einer Fahrt in beliebiger Position auf dem Rand 3c des Tragelements 3 kippen und abstellen kann. Gleiches gilt umgekehrt für ein Aufsteigen auf das Tragelement 3 und ein anschließendes Anfahren. In die Öffnung 3b ist von unten die Kugel 4 eingesetzt beziehungsweise das Tragelement 3 wird mit seiner Öffnung 3b auf die Kugel 4 aufgesetzt. Hierbei stützt sich dann das Tragelement 3 über die Antriebsanordnung 5 auf der Kugel 4 ab. Die Antriebsanordnung 5 ist derart konfiguriert, dass zwischen einem inneren Rand 3d (siehe Figur 2) der Öffnung 3b der Scheibe 3a, die die Öffnung 3b außen begrenzt, und der Kugel 4 ein Spalt 6 (siehe Figur 2) verbleibt. Der Spalt 6 sorgt für eine freie räumliche Bewegbarkeit der Kugel 4 relativ zu dem Tragelement 3. Über die Antriebsanordnung 5 ist die Kugel 4 relativ zu dem Tragelement 3 bewegbar und rollt hierbei auf dem Boden 8 ab. Die Antriebsanordnung 5, insbesondere die Bewegungsrichtung der Kugel 4, wird über eine Gewichtsverlagerung des Fahrers 2 und somit einer Neigung des Tragelements 3 in eine gewünschte Fahrtrichtung angesteuert. Entsprechender Weise kann ein Fahrer 2 sich somit in allen beliebigen Richtungen mit Hilfe des Fahrzeuges 1 auf dem Boden 8 fortbewegen.

Auch zeigt die Figur 1, dass der Fahrer 2 ohne einen lenkerartigen Griff - wie in etwa von einem Skateboard bekannt - auf dem Tragelement 3 steht, wenn er mit dem Fahrzeug 1 verfährt. Auch ein Kniebrett oder ein Sitz sind nicht auf dem Tragelement 3 vorgesehen. Es kann jedoch an dem Tragelement 3 ein Griff oder in dem Tragelement 3 eine Grifföffnung vorgesehen sein, um das Fahrzeug 1 einfach tragen zu können. Für den Fahrer 2 sieht das Fahrzeug 1 auf dem Tragelement 3 zwei Aufstandsflächen 7 für die Füße 2a des Fahrers 2 vor. Diese Aufstandsflächen 7 können bloße Markierungen in der Größe von Füßen 2a sein, entsprechende freie Bereiche auf dem Tragelement 3 sein, einen Halteriemen 7a aufweisen oder schuh- oder sandalenförmig mit oder ohne Halteriemen 7a oder gleichwirkenden Mittel ausgebildet sein, um dem Fahrer 2 einen festeren Halt auf dem Tragelement 3 während der Fahrt zu geben. Als besonders vorteilhaft hat sich heraus gestellt, im Bereich der Aufstandsflächen 7 nach oben und in Vorwärtsfahrtrichtung V offene Führungen nach Art einer Snowboardbindung ohne Halteriemen vorzusehen. Somit kann der Fahrer 2 jederzeit mit einem großen Schritt nach vorne absteigen und kann während der Fahrt das Fahrzeug 1 über seine an der Führung anliegenden Waden führen. Die Wade und die Füße werden von dieser offenen Führungsschale zusätzlich seitlich und die Wade auch hinten geführt. Die Führungen sind elastisch ausgebildet, um das dem Fahrer 2 das Aussteigen nach vorne zu ermöglichen, können aber die Einsteigeöffnung im Ausgangszustand verjüngen, so dass diese beim Einsteigen im elastischen Bereich nach außen zur Vergrößerung der Einsteigeöffnung bewegt werden müssen. Auf jeden Fall bleibt die Führung nach oben und in Vorwärtsfahrtrichtung V offen. Die Art der Führung bietet einen guten Kompromiss zwischen freiem Stehen auf dem Fahrzeug und gleichzeitigem Übertragen von Führungskräften auf das Tragelement 3.

Die Aufstandsflächen 7 bestimmen indirekt auch die Größe beziehungsweise Breite des Tragelements 3, da der Fahrer bequem und sicher auf dem Tragelement 3 stehen muss, um das Fahrzeug durch Gewichtsverlagerungen steuern zu können. In Bezug auf die Aufstandsflächen 7 ist auch gezeigt, dass diese in Bezug auf die Kugel 4 gegenüberliegend auf dem Tragelement 3 angeordnet sind. In einer Vorwärtsfahrtrichtung V gesehen des Fahrzeuges 1 gesehen sind die Aufstandsflächen 7 rechts und links neben der Kugel 4 angeordnet. Die Vorwärtsfahrtrichtung V ist hierbei auf den Fahrer 2 bezogen, dass dieser sich mit einer geraden Blickrichtung nach vorne also brustwärts nach vorne bewegt.

Außerdem ist der Figur 1 zu entnehmen, dass das Tragelement 3 in seiner horizontal ausgerichteten Lage vorzugsweise auf Höhe eines Äquators 4a bezogen auf eine vertikale Hochachse z der Kugel 4 angeordnet ist. Denkbar ist auch das Tragelement 3 höher für Fortgeschrittene oder tiefer für Anfänger anzuordnen. Hierdurch werden größere oder geringere Neigungswinkel des Tragelements 3 in Bezug auf die Kugel 4 erlaubt, die ein Balancieren, Auf- oder Absteigen oder Steuern des Fahrzeuges 1 erschweren oder erleichtern. Unabhängig von der Lage des Tragelements 3 relativ zu dem Äquator 4a der Kugel 4 stützen sich die Allseitenräder 9a, 9b und 9c bei horizontal ausgerichtetem Tragelement 3 oberhalb des Äquators 4a der Kugel 4, da das Tragelement 3 allein über die Allseitenräder 9a, 9b und 9c labil an der Kugel 4 aufgehängt beziehungsweise abgestützt ist.

In der Figur 2 ist eine Draufsicht auf das Fahrzeug 1 ohne einen Fahrer 2 gezeigt. Besonders gut ist in dieser Ansicht die Ausgestaltung der Antriebsanordnung 5 zu erkennen. Die Antriebsanordnung 5 besteht im Wesentlichen aus einem ersten Allseitenrad 9a, einem zweiten Allseitenrad 9b und einem dritten Allseitenrad 9c, die jeweils um eine erste Drehachse 9a, eine zweite Drehachse 9b und eine dritte Drehachse 9c drehbar gelagert sind, sowie einem vierten Allseitenrad 10, das drehbar um eine vierte Drehachse 10a gelagert ist. Die verwendeten Allseitenräder 9a, 9b, 9c und 10 sind allgemein bekannt und werden auch als omnidirektionale Räder bezeichnet. Bei den Allseitenrädern 9a, 9b, 9c und 10 besteht die Lauffläche des Allseitenrades 9a, 9b, 9c und 10 aus einer Vielzahl entlang des Umfanges angeordneten Rollen, deren Drehachsen im rechten Winkel zur Drehachse 9d, 9e, 9f und 10a des jeweiligen Allseitenrades 9a, 9b, 9c und 10 und tangential zum Umfang des Allseitenrades 9a, 9b, 9c und 10 liegen. Die Verwendung von Allseitenrädern 9a, 9b, 9c und 10 erlaubt, dass sich die Kugel 4 reibungsarm neben der Antriebsrichtung des jeweiligen Allseitenrades 9a, 9b, 9c und 10 in alle anderen Richtungen drehen kann.

Um nachfolgend die Fahrrichtungen und die Funktionsweise des Fahrzeuges 1 näher erläutern zu können, wird ein kartesisches Koordinatensystem mit seinem Nullpunkt in den Mittelpunkt der Kugel 4 gelegt. Die Längsachse x dieses Koordinatensystems weist somit in Vorwärtsfahrtrichtung V und Rückwärtsfahrtrichtung H; die Querachse y in Rechtsfahrtrichtung R und Linksfahrtrichtung L und die Hochachse z in die Vertikale. Die Längsachse x und die Querachse y verlaufen hierbei parallel und die Hochachse z rechtwinklig zu einem horizontal ausgerichtetem Boden 8.

Mittels der Allseitenräder 9a, 9b und 9c ist das Fahrzeug 1 in allen Richtungen V, H, R und L sowie Zwischenrichtungen hiervon verfahrbar. Die Drehachsen 9d, 9e, 9f sind hierbei parallel zu einer Oberseite 3e des Tragelements 3 angeordnet sowie mit Abstand und tangential zur Oberfläche 4b der Kugel 4. Entsprechend sind bei einem horizontalem Boden 9 und einer hierzu parallelen Oberseite 3e des Tragelements 3, die Drehachsen 9d, 9e, 9f parallel zum Boden 9 ausgerichtet. Außerdem sind das erste, zweite und dritte Allseitenrad 9a, 9b und 9c gleichmäßig um den Umfang der Kugel 4 herum verteilt angeordnet. In Bezug auf den Nullpunkt des Koordinatensystems und auf die x-y-Ebene gesehen sind die Allseitenrad 9a, 9b und 9c jeweils in einem Winkel von 120 Grad zueinander beabstandet. Das zweite Allseitenrad 9b ist mit seiner Drehachse 9e rechtwinklig zur Längsachse x ausgerichtet und fluchtet mit der Längsachse x. Eine Bewegung des Fahrzeugs 1 in Vorwärtsfahrtrichtung V oder Rückwärtsfahrtrichtung H wird beispielsweise dadurch erreicht, dass das zweite Allseitenrad 9b in die eine Richtung und die beiden anderen Allseitenräder 9a, 9b gegenläufig angetrieben werden. Entsprechend der gleichmäßigen Verteilung der Allseitenräder 9a, 9b und 9c sind das erste und dritte Allseitenrad 9a, 9c zwischen der Längsachse x und der Querachse y sowie dem in Bezug auf die Querachse y dem zweiten Allseitenrad 9b gegenüberliegend angeordnet. Die Drehachsen 9d, 9f des ersten und dritten Allseitenrades 9a, 9c sind somit schräg zur Längsachse x und auch zur Querachse y ausgerichtet. Die Allseitenräder 9a, 9b, 9c haben neben der Funktion als Antriebsräder zu dienen auch immer gleichzeitig die Funktion als Stützräder für die jeweils gegenüber liegenden Allseitenräder 9c, 9b, 9a zu dienen. Ein koordinierter Betrieb der Allseitenräder 9a, 9b, 9c führt somit zu einer Bewegung des Fahrzeugs 1 in Vorwärtsfahrtrichtung V und Rechtsfahrtrichtung R oder in Rückwärtsfahrtrichtung H und Linksfahrtrichtung L oder in jeder beliebigen Zwischenrichtung hiervon.

Mittels des vierten Allseitenrades 10 ist das Fahrzeug 1 in Bezug auf eine Rotation des Tragelements 3 um die Kugel 4 beziehungsweise die Hochachse z stabilisierbar. Dies kann beispielweise bei Bewegungen des Fahrzeugs 1 in Vorwärtsfahrtrichtung V oder in Rückwärtsfahrtrichtung H erforderlich sein. Auch kann das vierte Allseitenrad 10 eingesetzt werden, um das Tragelement 3 relativ zu der Kugel 4 mit dem Ziel zu rotieren, dass der Fahrer 2 mit seiner Brust in der jeweiligen Fahrtrichtung ausgerichtet bleibt. Das vierte Allseitenrad 10 ist um seine Drehachse 10a drehbar an dem Tragelement 3 gelagert und steht in Höhe des Äquators 4a der Kugel 4 mit der Oberfläche 4b der Kugel 4 im Eingriff. Die Drehachse 10a ist hierbei parallel zu Hochachse z ausgerichtet, wenn das Tragelement 3 horizontal ausgerichtet ist. Da das Tragelement 3 in dem Ausführungsbeispiel in Höhe des Äquators 4a der Kugel 4 angeordnet ist, ist das vierte Allseitenrad 10 in das Tragelement 3 eingelassen. Sollte das Tragelement 3 in Bezug auf den Äquator 4a höher oder tiefer angeordnet sein, ist die Lage des vierten Allseitenrades 10 entsprechend anzupassen, damit es weiterhin im Bereich des Äquators 4a im Eingriff mit der Kugel 4 steht.

Auch ist der Figur 2 zu entnehmen, dass die drei Allseitenrädern 9a, 9b und 9c jeweils über einen elektrischen Motor 11a, 11b und 11c mit einem vorgeschaltetem Getriebe 12a, 12b und 12c angetrieben sind. Die Motoren 11a, 11b und 11c sind auf dem Tragelement 3 befestigt und werden über eine Steuerung 13 angesteuert. Ein entsprechender Antrieb ist auch für das vierte Allseitenrad 10 vorgesehen, aber in der Figur 2 nicht dargestellt. Als Motoren 11a, 11b und 11c kommen 24V-Gleichstrommotoren zum Einsatz mit Leistungen im Bereich von 350 Watt bis 800 Watt.

Alternativ zu den drei Allseitenrädern 9a, 9b und 9c können auch vier Allseitenräder Verwendung finden, von denen mindestens zwei angetrieben sind. Die verbleibenden und gegenüber liegenden Allseitenräder übernehmen dann die Funktion von Stützrädern. Vorteilhafter Weise sind hierbei die vier Allseitenräder gleichmäßig um die Kugel 4 herum verteilt und die benachbarten Allseitenräder sind jeweils um 90 Grad zueinander angeordnet. Auch sind Antriebsvarianten denkbar, in denen auf das vierte Allseitenrad 10 in Bezug auf die z-Achse verzichtet wird.

Ferner ist in der Figur 2 zu erkennen, dass zwischen der Oberfläche 4b der Kugel 4 und dem inneren Rand 3d des Tragelements 3 ein umlaufender Spalt 6 verbleibt, der eine freie Drehbarkeit der Kugel 4 relativ zu dem Tragelement 3 erlaubt. Auch kann eine Federung des Fahrzeugs 1 im Bereich der Anlenkung der Allseitenräder 9a, 9b, 9c, 10 oder über eine elastische Kugel vorgesehen werden. Das Tragelement 3 stützt sich ausschließlich über die Allseitenräder 9a, 9b, 9c, 10 auf der Kugel ab. Weitere abstützende oder verbindende Elemente werden nicht benötigt. Die Kugel 4 ist aus Hartplastik hergestellt. Beispielsweise sind Bowlingkugeln geeignet.

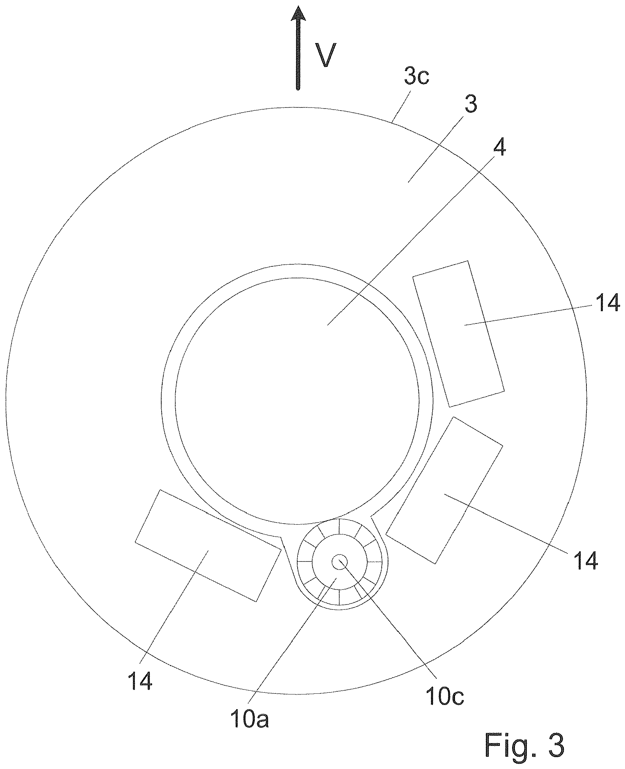

Die Figur 3 zeigt eine Ansicht des Fahrzeuges 1 gemäß Figur 2 von unten. Es ist erkennbar, dass mehrere wieder aufladbare Batterien 14 von unten an dem Tragelement 3 befestigt sind. Die Batterien 14 sind möglichst in der Nähe zur Kugel 4 angeordnet, um ein Kippen des Tragelements 3 nicht zu behindern und ein Ausbalancieren des Tragelements 3 zu erleichtern. In Bezug auf das erleichtere Ausbalancieren sind auch mehrere Batterien 14 entlang des Tragelements 3 und der Kugel 4 verteilt vorgesehen. Grundsätzlich ist es auch möglich, die Batterien 14 auch auf dem Tragelement 3 anzuordnen oder nur eine Batterie 14 zu verwenden.

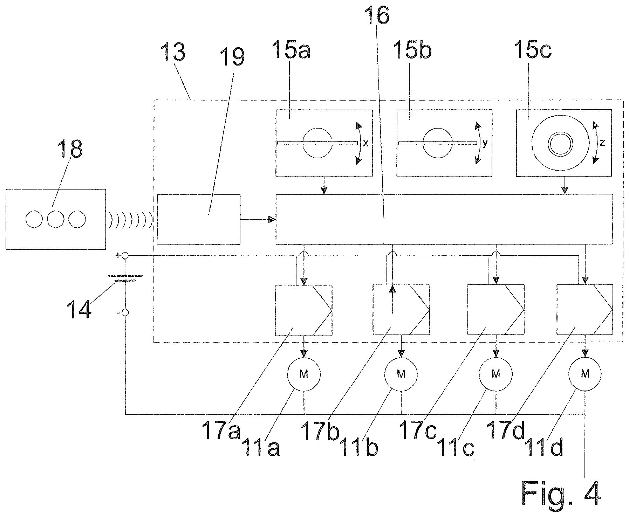

In der Figur 4 ist ein Prinzipschaltbild der Steuerung 13 des Fahrzeuges 1 dargestellt.

Die Steuerung 13 ist auf dem Tragelement 3 angeordnet. In der Steuerung 13 sind eine Vielzahl von Bauteilen zusammengefasst, um ausgehend von einer Balance-Lage des Tragelements 3 Gewichtsverlagerungen des Fahrers 2 und somit ein Neigen des Tragelements 3 zu erkennen. Der Grad der Neigung und die Neigungsrichtung werden von einem Nick-Kreisel 15a, einem Roll-Kreisel 15b und einem Gier-Kreisel 15c erkannt. Die Kreisel 15a, 15b und 15c liefern Beschleunigungs- und Winkeldaten. Der Nick-Kreisel 15a erfasst die Schwenkbewegung um die Querachse y, der Roll-Kreisel 15b um die Längsachse x und der Gier-Kreisel 15c um die Hochachse z. In Abhängigkeit von dem erkannten Grad der Neigung und der Neigungsrichtung wird in einer Auswertesteuerung 16 der oder die anzutreibenden Motoren 11a, 11b, 11c und 11d bestimmt über jeweils einen Regler in der erforderlichen Drehrichtung und Drehgeschwindigkeit angesteuert, um die gewünschte Fahrbewegung zu erzeugen. Gleichzeitig wird parallel über ein Balance-Steuerungsmodul innerhalb der Auswertesteuerung 16 die Balance-Lage des Tragelements 3, die vorzugsweise horizontal ist, durch entsprechende Ansteuerung der Motoren 11a, 11b und 11c wieder zu erreichen. Die Auswertesteuerung 16 ist als programmierbarer Mikrocomputer ausgebildet. Die zuvor von dem Fahrer 2 über die erste Gewichtsverlagerung hervorgerufene Fahrbewegung bleibt erhalten, solange der Fahrer 2 die Neigung des Tragelements 3 aufrechterhält, und wird aufgehoben, wenn der Fahrer 2 sein Gewicht in die Gegenrichtung verlagert. Das vierte Allseitenrad 10 stabilisiert das Tragelement 3 relativ zu der Kugel 4, was bei linearen Fahrtbewegungen hilfreich ist. Auch können unerwünschte Steuerungszustände wie eine Rotation des Tragelements 3 um die Kugel 4 aufgelöst werden. Im Zusammenhang mit Lenksteuerungsmodulen innerhalb der Auswertesteuerung 16 kann gezielt eine Drehung des Tragelements 3 relativ zu der Kugel 4 induziert werden, so dass der Fahrer 2 immer brustwärts in Fahrtrichtung ausgerichtet bleibt beziehungsweise am Ende einer Lenkfahrt wieder brustwärts in Fahrtrichtung ausgerichtet ist.

Außerdem ist der dem Prinzipschaltbild in Figur 4 zu entnehmen, dass ein Steuerelement 18 in Form einer Handfernbedienung vorgesehen, über die das Fahrzeug 1 ein- und ausgeschaltet werden kann. Auch ist an dem Steuerelement 18 ein Totmannschalter vorgesehen, so dass das Fahrzeug 1 nur eingeschaltet ist, wenn eine entsprechende Taste an dem Steuerelement 18 von dem Fahrer 2 gedrückt wird. Auch können weitere Tasten vorgesehen sein, um verschiedene Fahrprogramme anwählen zu können. Diese Fahrprogramme können nach unterschiedlichen Gesichtspunkten angelegt sein. Es können verschiedene Schwierigkeitsgrade zwischen Anfängern und Geübten sowie verschieden Gewichtsklassen eingestellt werden, die unterschiedliche Beschleunigungen, Maximal-Geschwindigkeiten und Empfindlichkeiten der Kreisel beziehungsweise der hieraus bestimmten Ansteuerungssignale für die Motoren 11a, 11b, 11c und 11d umfassen. Auch kann der vierte Motor 12d, mit dem die Bewegung des Tragelements 3 um die Kugel 4 gesteuert wird, auf verschiedene Weisen angesteuert werden. Eine Ansteuerung des vierten Motors 12d über die Messsignale des Gier-Kreisels 15c führt im Wesentlichen zu einer Stabilisierung des Tragelements 3 und verhindert eine ungewollte Drehung des Tragelements 3 um die Hochachse z. Um wie bekannt vom Fahrradfahren Kurven fahren zu können, kann in der Auswertesteuerung 16 hinterlegt werden, dass mittels dem Steuerelement 18 und einem dort vorhandenem Joy-Stick die Ansteuerung des vierten Motors 12d überlagert werden kann, so dass das Tragelement 3 um die Kugel 3 beziehungsweise dessen Hochachse z rotiert, so dass der Fahrer 2 weiterhin brustwärts verfährt. Grundsätzlich sind die Fahrbewegungen in allen Fahrrichtungen V, H, R und L auch unabhängig voneinander und ohne eine Drehung des Tragelementes 3 möglich. Durch eine Überlagerung mit der Drehbewegung über die Hochachse z mittels des Steuerelements 18 wird ein natürlicheres Fahrgefühl vermittelt. Auch können ein Langsamfahrt- und ein Schnellfahrtprogramm vorgesehen sein.
Unter den vorgenannten Nick-Kreisel 15a, Roll-Kreisel 15b und Gier-Kreisel 15c sind jegliche Art von Messgeräten zu verstehen, mit den die Winkellagen und Winkelrichtungen in Bezug auf die Längsachse x, Querachse y und Hochachse z bestimmt werden können. Üblicher Weise handelt sich um elektronische Schaltungen, die mit Piezo-Sensoren arbeiten. Da der Nick-Kreisel 15a, der Roll-Kreisel 15b und der Gier-Kreisel 15c jeweils rechtwinklig zueinander angeordnet sind, kann hierüber die Lage des Tragelements 3 im Raum ermittelt werden.

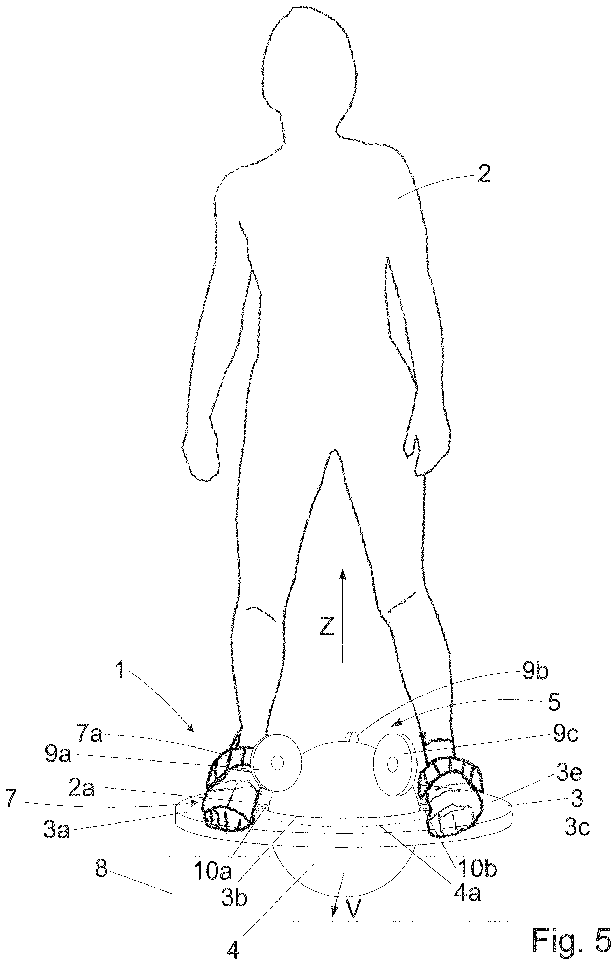

Nachfolgend wird eine zweite Ausführungsform der vorliegenden Erfindung an Hand der Figuren 5 bis 8 beschrieben, die im Wesentlichen mit der ersten Ausführungsform übereinstimmt, so dass auf die vorstehende Beschreibung zu den Figuren 1 bis 4 verwiesen wird. Im Folgenden werden nur die Unterschiede beschrieben.

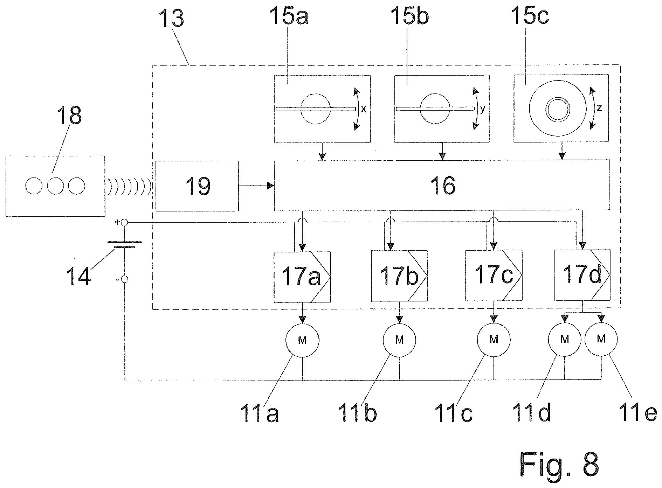

In der Figur 5 eine perspektivische Prinzip-Ansicht eines erfindungsgemäßen Fahrzeugs 1 in einer zweiten Ausführungsform gezeigt. Im Bereich von den Füßen 2a des Fahrers 2 sowie zwischen den Füßen 2a und der Kugel 4 sind ein viertes Allseitenrad 10a und ein fünftes Allseitenrad 10b zu erkennen. Das vierte Allseitenrad 10a und das fünfte Allseitenrad 10b sind flächig in dem Tragelement 3 angeordnet und jeweils um nicht dargestellte Drehachsen 10c, 10d drehbar gelagert. Die vierten und fünften Drehachsen 10c, 10d sind bei horizontal ausgerichtetem Tragelement 3 vertikal ausgerichtet. Außerdem ist ersichtlich, dass das vierte Allseitenrad 10a und das fünfte Allseitenrad 10b in Bezug auf die Kugel 4 um 180 Grad zu einander versetzt sowie gegen überliegend angeordnet sind. Bezogen auf die Vorwärtsfahrtrichtung V sind das vierte Allseitenrad 10a und das fünfte Allseitenrad 10b achsensymmetrisch angeordnet. Bei Vorwärtsfahrtrichtung V des Fahrzeuges 1 greifen somit das vierte Allseitenrad 10a und das fünfte Allseitenrad 10b im Bereich einer Rollachse an die Kugel 4 an. Auch sind das vierte Allseitenrad 10a und das fünfte Allseitenrad 10b genau wie anderen drei Allseitenräder 9a, 9b und 9c über einen vierten und fünften elektrischen Motor 11d und 11e angetrieben, die schematisch nur in Figur 8 gezeigt sind, da diese in Figur von dem Tragelement 3 verdeckt sind. Der vierte und fünfte elektrische Motor 11d und 11e sind somit auf der Unterseite des Tragelements 3 gemeinsam mit den vorgeschalteten Getrieben angeordnet. Es ist auch möglich, den vierten und fünften elektrischen Motor 11d und 11e gemeinsam mit den vorgeschalteten Getrieben auch auf der Oberseite des Tragelements 3 anzuordnen, wobei die Unterseite jedoch bevorzugt ist.

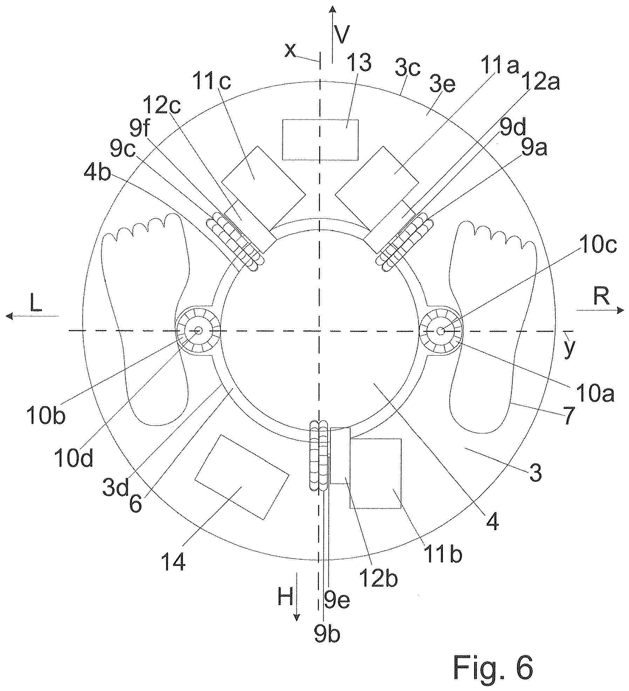

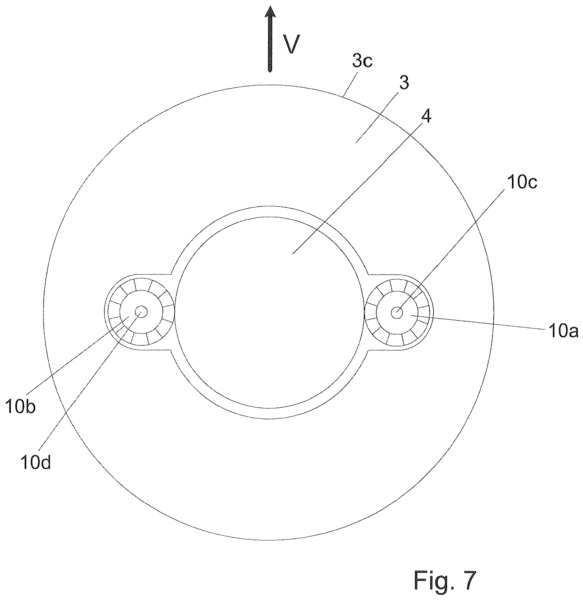

Gegenüber der Figur 3 sind in der Figur 7 keine Batterien 14 zu erkennen, da diese nun auf der Oberseite des Tragelements 3 angeordnet sind (siehe Figur 6). Die Position der nun einzigen Batterie 14 ist so gewählt, dass das Tragelement 3 in Bezug auf die anderen darauf angeordneten Komponenten ausbalanciert ist.

Die Figur 8 zeigt ein Prinzipschaltbild der Steuerung des Fahrzeuges 1, in dem die beiden elektrischen Motoren 11d und 11e der vierten und fünften Allseitenräder 10b dargestellt sind.

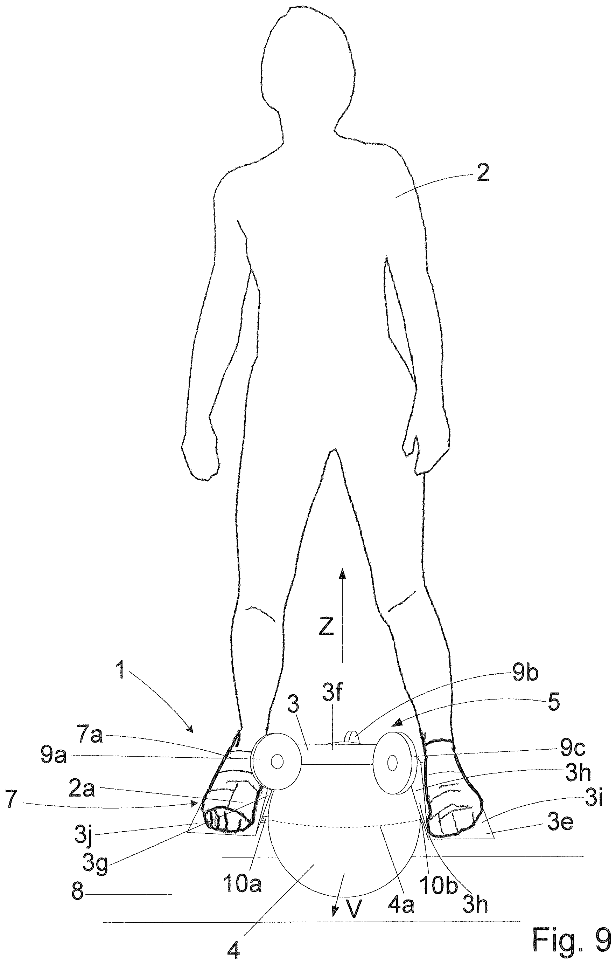

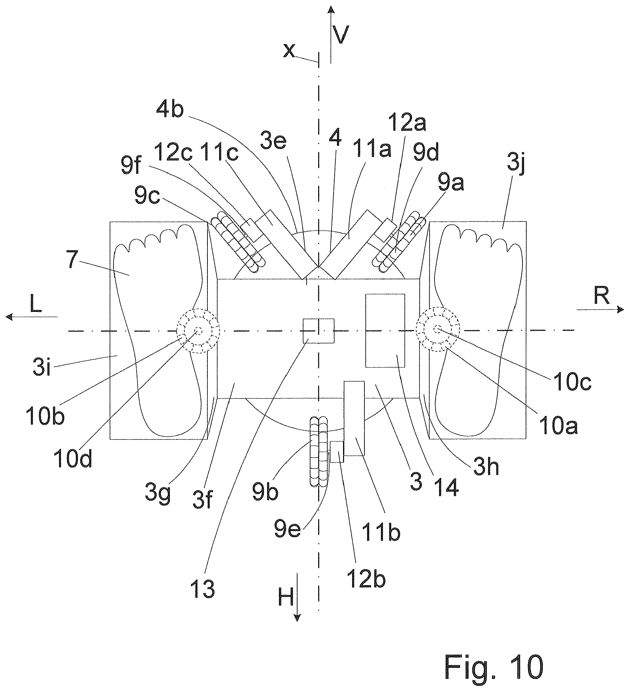

In der Figur 9 ist eine perspektivische Prinzip-Ansicht eines erfindungsgemäßen Fahrzeugs 1 für die Fortbewegung eines Fahrers 2 in einer dritten Ausführungsform dargestellt. Diese Ausführungsform stimmt im Wesentlichen mit den vorbeschriebenen Ausführungsformen überein, so dass in Bezug auf die Gemeinsamkeiten auf die vorstehenden Beschreibung verwiesen wird. Auch wurden für gleiche Teile die gleichen Bezugszeichen verwendet. Die Anordnung der Allseitenräder 9a, 9b, 9c, 10a und 10b entspricht hierbei der der zweiten Ausführungsform mit drei im 120 Grad-Winkelabstand zueinander angeordneten Allseitenrädern 9a, 9b, 9c, die als Antriebs- und Stützräder dienen, sowie zwei weiteren am Äquator angreifenden Allseitenrädern 10a, 10b, die die Bewegung um die Hochachse z steuern. Das in den ersten beiden Ausführungsformen als Ring ausgebildete Tragelement 3 ist in der dritten Ausführungsform durch ein Tragelement 3 ersetzt, das in Vorwärtsfahrtrichtung V gesehen an ein Trapezdachprofil im Querschnitt gesehen erinnert. Das Tragelement 3 besteht somit von oben ausgehend aus einem horizontalen und flachen Querträger 3f, an den sich an den Rändern rechts und links jeweils ein nach unten verlaufender Seitensteg 3g, 3h anschließt. Der Querträger 3f befindet sich somit oberhalb der Kugel 4 und die beiden Seitenstege 3g, 3h erstrecken sich ausgehend von dem Querträger 3f senkrecht beziehungsweise schräg nach außen erweiternd nach unten bin in etwa auf die Höhe des Äquators 4a der Kugel 4. An den unteren Enden der Seitenstege 3g, 3h schließen sich horizontale und nach außen weisende Seitenschenkel 3i, 3j an, die eine ausreichende Breite und Länge aufweisen, um die rechte und linke Aufstandsfläche 7, die somit auf gegenüberliegenden Seiten der Kugel 4 in Höhe des Äquators 4a befinden, aufzunehmen. Der rechte und linke Seitenschenkel 3i, 3j können als nach oben klappbar ausgestaltet sein, um das Fahrzeug 1 noch kompakter auszugestalten und einfacher zu transportieren. In Bezug auf die Höhe der Position der Aufstandsflächen 7 zu dem Äquator 4a wird auf die vorhergehende Beschreibung verwiesen. In Draufsicht auf das Tragelement 3 gesehen ist dessen H-förmige Form zu sehen. Durch die von einem auf den beiden Aufstandsflächen 7 stehenden Fahrer hervorgerufene Gewichtskraft werden die unter den Seitenschenkel 3i, 3j angeordneten Allseitenräder 10a und 10b (siehe Figur 10) gegen die Kugel 4 gedrückt, so dass sie ausreichend Traktion auf der Kugel 4 haben. Gleiches gilt auch für die drei oberen Allseitenräder 9a, 9b und 9c, die an dem Querträger 3f gelagert sind. Der Vorteil dieser dritten Ausführungsform im Vergleich zu den zuvor beschriebenen ersten und zweiten Ausführungsform besteht darin, dass die Außenabmessungen des Fahrzeugs 1 deutlich geringer sind und das Fahrzeug 1 sich daher einfacher im Stadtverkehr, insbesondere in U-Bahnen, S-Bahnen und auf Rolltreppen, transportieren lässt. Der Kontakt zwischen Fahrer 2 und den Aufstandflächen 7 beschränkt sich wie bei allen anderen Ausführungsformen auf die Füße und gegebenenfalls auf die Waden des Fahrers 2. Die Steuerung erfolgt wie in allen hier beschriebenen Ausführungsformen wieder durch Gewichtsverlagerung in die gewünschte Bewegungsrichtung.

Die Figur 10 ist eine Draufsicht auf das Fahrzeug gemäß Figur 9 ohne Fahrer und zeigt in der Mitte das Tragelement 3, das die drei Motoren 11a, 11b und 11c für den Antrieb mit jeweils ihren Getrieben 12a, 12b und 12c und den hiervon angetriebenen Allseitenrädern 9a, 9b und 9c. Hierbei dienen die Allseitenräder 9a, 9b und 9c sowohl zum Antrieb als auch als tragende Verbindung zwischen dem Tragelement 3 und der Kugel 4. Seitlich der Kugel 4 sind gegenüberliegend die Aufstandsflächen 7 etwa in Höhe des Äquators 4a angebracht. Die Verbindung zwischen dem Querträger 3f und den Seitenschenkeln 3i, 3j mit den Aufstandsflächen 7 über die Seitenstege 3g, 3h ist so gestaltet, dass die Seitenschenkeln 3i, 3j mit den Aufstandsflächen 7 sie elastisch in Richtung Kugel 4 bewegen können, sonst aber eine ausreichende Steifheit aufweisen, um den Fahrer 2 sicher tragen zu können. Die Allseitenräder 10a und 10b befinden sich unter den Seitenschenkeln 3i, 3j mit den Aufstandsflächen 7 und sind in der Skizze daher schraffiert dargestellt. Die Steuerung 13 und die Batterie 14 sind oberhalb des Tragelements 3 angebracht.

In der Figur 11 ist eine perspektivische Prinzip-Ansicht eines erfindungsgemäßen Fahrzeugs 1 für die Fortbewegung eines Fahrers 2 in einer vierten Ausführungsform dargestellt. Diese Ausführungsform stimmt im Wesentlichen mit den vorbeschriebenen Ausführungsformen überein, so dass in Bezug auf die Gemeinsamkeiten auf die vorstehende Beschreibung verwiesen wird. Auch wurden für gleiche Teile die gleichen Bezugszeichen verwendet. Die Anordnung der Allseitenräder 9a, 9b, 9c unterscheidet sich von den vorher beschriebenen Ausführungsformen darin, dass die beiden in Bezug auf den Fahrer 2 brustwärts gelegenen und somit in Vorwärtsfahrtrichtung V gesehen vorne liegenden Allseitenräder 9a und 9c mit ihren im Wesentlichen horizontalen Drehachsen 9d, 9f in einer Draufsicht auf das Fahrzeug 1 gesehen im 90 Grad Winkel zueinander angeordnet sind. Im Gegensatz zu den ersten und dritten Allseitenrädern 9a und 9c wird das zweite Allseitenrad 9b mit seiner Drehachse 9e die Längsachse x schneidend und aus einer Vertikalen schräg nach vorne im Bereich von 20 bis 40 Grad, vorzugsweise 30 Grad, gekippt ausgerichtet. Somit kann über das zweite Allseitenrad 9b die Bewegung um die Hochachse z bewirkt werden. Das Tragelement 3 ist wie in der dritten Ausführungsform in Form eines Trapezwinkelblechs ausgebildet. Außerdem entfallen durch die Nutzung des zweiten Allseitenrads 9b für Steuerung des Fahrzeugs 1 um die Hochachse z das vierte und fünfte Allseitenrad 10a, 10b inklusive der vierten und fünften Antriebsmotoren 11d, 11f und der zugeordneten Getriebe. Die drei Bewegungsfreiheiten der Kugel 4 werden in vierten Ausführungsform mit der minimalen Anzahl von Motoren 11a, 11b, 11c und Allseitenrädern 9a, 9b, 9c angesteuert.

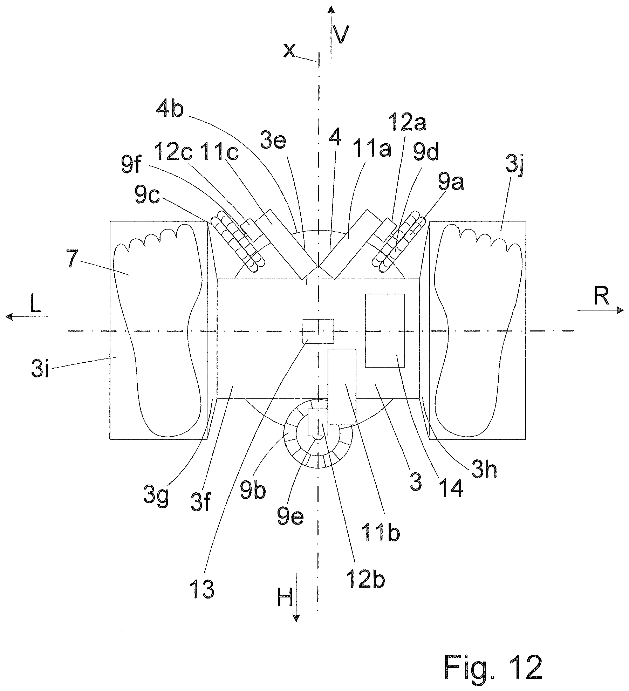

Die Figur 12 zeigt eine Draufsicht auf das Fahrzeug gemäß Figur 11 ohne Fahrer, die im Wesentlichen mit der dritten Ausführung gemäß Figur 9 übereinstimmt. Es ist ersichtlich, dass gegenüber der dritten Ausführungsform 4 das zweite Allseitenrad 9b ist mit seiner Drehachse 9e so ausgerichtet ist, dass die Drehachse 9e die Längsachse x schneidet und aus einer Vertikalen schräg nach vorne im Bereich von 10 bis 30 Grad gekippt ist. Hierdurch kann das zweite Allseitenrad 9b ausgerichtet auch die Drehung um die Hochachse z bewirken.

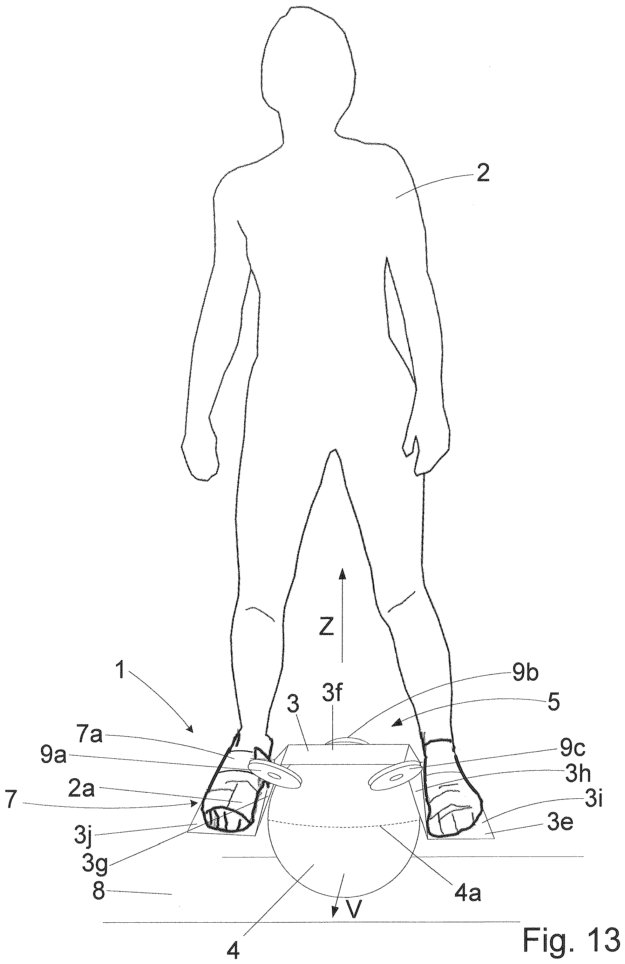

In der Figur 13 ist eine perspektivische Prinzip-Ansicht eines erfindungsgemäßen Fahrzeugs 1 für die Fortbewegung eines Fahrers 2 in einer fünften Ausführungsform dargestellt. Diese Ausführungsform stimmt im Wesentlichen mit den vorbeschriebenen Ausführungsformen überein, so dass in Bezug auf die Gemeinsamkeiten auf die vorstehenden Beschreibung verwiesen wird. Auch wurden für gleiche Teile die gleichen Bezugszeichen verwendet. Die Anordnung der ersten, zweiten und dritten Allseitenräder 9a, 9b und 9c unterscheidet sich von den der vorher zuvor beschriebenen Ausführungsformen darin, dass die drei Allseitenräder 9a, 9b und 9c jeweils um eine Drehachse 9d, 9e und 9f drehbar ist, die ausgehend von einer Vertikalen schräg nach innen in Richtung der Kugel 4 im Bereich von 20 bis 40 Grad, vorzugsweise 30 Grad, gekippt ausgerichtet sind. Die Drehachsen 9d, 9e und 9f schneiden sich in einem gemeinsamen Punkt oberhalb der Kugel 4 und im Zentrum der Kugel 4 ausgehend von einem horizontalem Boden 8 und bei einem horizontalem Tragelement 8. Das erste, zweite und dritte Allseitenrad 9a, 9b und 9c sind in Draufsicht auf das Fahrzeug 1 gesehen in jeweils um 120 Grad versetzt umlaufend zueinander über der Kugel 4 angeordnet.

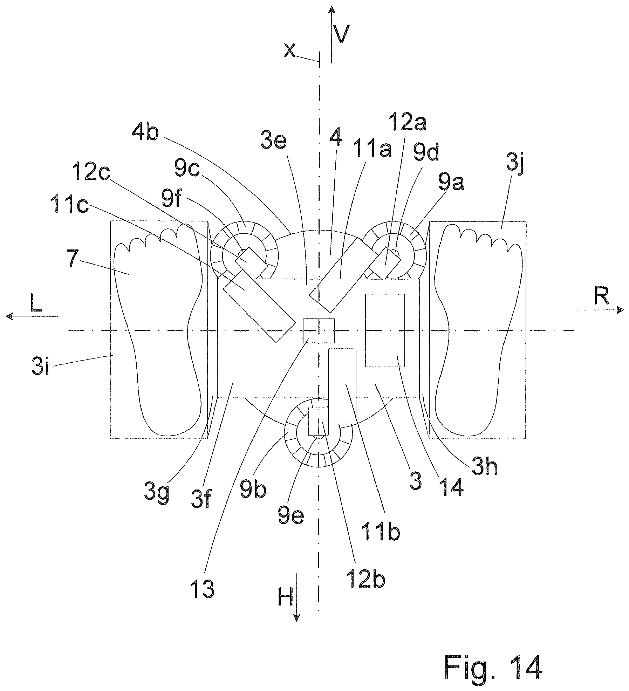

Die Figur 14 zeigt eine Draufsicht auf das Fahrzeug gemäß Figur 12 ohne Fahrer. Alle drei Allseitenräder 9a, 9b und 9c sind gleichmäßig um die Kugel 4 herum angeordnet und treiben diese an. Aufgrund der zuvor beschriebenen Ausrichtung der Drehachsen 9d, 9e und 9f können die drei Allseitenräder 9a, 9b und 9c einerseits die Fahrbewegungen der Kugel 4 in alle Richtungen als auch eine Drehung der Kugel 4 um die Hochachse z bewirken, so dass in vorteilhafter Weise auf weitere Allseitenräder mit dieser Funktion verzichtet werden kann.

In allen vorbeschriebenen Ausführungsbeispielen stützen sich die Allseitenräder 9a, 9b und 9c auf der oberen Hälfte der Kugel 4 ab. Bei einem Vergleich der Kugel 4 mit einem Erdball kann der Ort der Anlage der Allseitenräder 9a, 9b und 9c auf der Kugel 4 als im Bereich von 20 bis 40, vorzugsweise 30, Grad nördlicher Breite beschrieben werden.

### Bezugszeichenliste

1 Fahrzeug
2 Fahrer
2a Füße
3 Tragelement
3a Scheibe
3b Öffnung
3c äußerer Rand
3d innerer Rand
3e Oberseite
3f Querträger
3g erster Seitensteg
3h zweiter Seitensteg
3i erster Seitenschenkel
3j zweiter Seitenschenkel
4 Kugel
4a Äquator
4b Oberfläche
5 Antriebsanordnung
6 Spalt
7 Aufstandsflächen
7a Halteriemen
8 Boden
9a erstes Allseitenrad
9b zweites Allseitenrad
9c drittes Allseitenrad
9d erste Drehachse
9e zweite Drehachse
9f dritte Drehachse
10a viertes Allseitenrad
10b fünftes Allseitenrad
10c vierte Drehachse
10d fünfte Drehachse
11a erster Motor
11b zweiter Motor
11c dritter Motor
11d vierter Motor
11e fünfter Motor
12a erstes Getriebe
12b zweites Getriebe
12c drittes Getriebe
13 Steuerung
14 Batterie
15a Nick-Kreisel
15b Roll-Kreisel
15c Gier-Kreisel
16 Auswertesteuerung
17a erster Regler
17b zweiter Regler
17c dritter Regler
17d vierter Regler
18 Schaltelement
19 Empfänger

H Rückwärtsfahrtrichtung
L Linksfahrtrichtung
R Rechtsfahrtrichtung
V Vorwärtsfahrtrichtung

x Längsachse
y Querachse
z Hochachse

## Patentansprüche

1. Fahrzeug (1) für die Fortbewegung eines Fahrers (2) mit einem auf einem Boden (8) abrollenden Element, mit einem sich auf dem abrollenden Element labil abstützenden Tragelement (3), mit einer sich an dem Tragelement (3) abstützenden Antriebsanordnung (5), die das abrollende Element antreibt und mit einer Steuerung (16), über die die Antriebsanordnung (5) in Abhängigkeit von der Neigung des Tragelements (3) und der Neigungsrichtung des Tragelements (3) in einer gewünschten Fahrtrichtung gesteuert ist, wobei das Fahrzeug (1) mit dem Tragelement (3) derart ausgebildet ist, dass der Fahrer (2) im Betrieb des Fahrzeuges (1) frei und balancierend auf dem Tragelement (3) steht, wobei das auf dem Boden (8) abrollende Element eine Kugel (4) ist und über die Antriebsanordnung (5) das Fahrzeug in beliebige Fahrrichtungen bewegbar ist und der Fahrer (2) ausschließlich über seine Füße und gegebenenfalls zusätzlich über seine Unterschenkel im Kontakt mit dem Fahrzeug (1) steht, **dadurch gekennzeichnet, dass** in dem Tragelement (3) eine Öffnung (3b) angeordnet ist und die Kugel (4) in die Öffnung (3b) des Tragelements (3) hinein ragt.

2. Fahrzeug (1) nach Anspruch 1, **dadurch gekennzeichnet, dass** das Fahrzeug (1) in Bezug auf den Fahrer (2) haltegrifflos ist.

3. Fahrzeug (1) nach Anspruch 1 oder 2, **dadurch gekennzeichnet, dass** das Tragelement (3) als ringförmige Scheibe (3a) ausgebildet ist und das Tragelement (3) einen kreisrunden, ovalen oder rechteckigen Rand (3c) oder Kombinationen hiervon hat.

4. Fahrzeug (1) nach Anspruch 3, **dadurch gekennzeichnet, dass** die ringförmige Scheibe (3a) des Tragelements (3) im Bereich der Höhe eines horizontalen Äquators (4a) der Kugel (4) angeordnet ist.

5. Fahrzeug (1) nach einem der Ansprüche 1 bis 2, **dadurch gekennzeichnet, dass** das Tragelement (3) in Vorwärtsfahrtrichtung des Fahrzeugs (1) gesehen trapezblechförmig ist.

6. Fahrzeug (1) nach einem der Ansprüche 1 bis 5, **dadurch gekennzeichnet, dass** auf dem Tragelement (3) Aufstandsflächen (7) für den Fahrer (2) angeordnet sind und die Aufstandsflächen (7) in Bezug auf die Kugel (4) gegenüber liegend angeordnet sind.

7. Fahrzeug (1) nach Anspruch 6, **dadurch gekennzeichnet, dass** die Aufstandsflächen (7) für den Fahrer (2) im Bereich der Höhe eines horizontalen Äquators (4a) der Kugel (4) angeordnet sind.

8. Fahrzeug (1) nach einem der Ansprüche 1 bis 7, **dadurch gekennzeichnet, dass** die Antriebsanordnung (5) an dem Tragelement (3) befestigt ist und die Antriebsanordnung (5) mindestens zwei Allseitenräder (9a, 9b, 9c) mit einer Drehachse (9d, 9e, 9f) zur Übertragung der Antriebskräfte auf die Kugel (4) aufweist.

9. Fahrzeug (1) nach Anspruch 8, **dadurch gekennzeichnet, dass** drei Allseitenräder (9a, 9b, 9c) auf dem Tragelement (3) angeordnet sind und gleichmäßig um die Kugel (4) herum verteilt sind.

10. Fahrzeug (1) nach Anspruch 8, **dadurch gekennzeichnet, dass** die Drehachse (9d, 9e, 9f) parallel zu dem Tragelement (3) ausgerichtet ist.

11. Fahrzeug (1) nach einem der Ansprüche 1 bis 10, **dadurch gekennzeichnet, dass** die Antriebsanordnung (5) mindestens ein Allseitenrad (10a, 10b) mit einer Drehachse (10c, 10d) aufweist, dessen Drehachse (10c, 10d) parallel zur Hochachse (z) der Kugel (4) bei horizontal ausgerichtetem Tragelement (3) ist und das mindestens eine Allseitenrad (10a, 10b) auf der Höhe eines horizontalen Äquators (4a) an der Kugel (4) angreift.

12. Fahrzeug (1) nach Anspruch 11, **dadurch gekennzeichnet, dass** die Antriebsanordnung (5) ein viertes Attseitenrad (10a) und ein fünftes Allseitenrad (10b) aufweist, die in Bezug auf die Kugel (4) gegenüber liegend an dem Tragelement (3) angeordnet sind.

13. Fahrzeug (1) nach Anspruch 12, **dadurch gekennzeichnet, dass** bei einer Bewegung des Fahrzeuges (1) in Vorwärtsfahrtrichtung (V) das vierte Allseitenrad (10a) und das fünfte Allseitenrad (10b) im Bereich einer Rollachse an die Kugel (4) angreifen.

14. Fahrzeug (1) nach Anspruch 8 oder 9, **dadurch gekennzeichnet, dass** mindestens eine der Drehachsen (9d, 9e, 9f) ausgehend von einer vertikalen Stellung in Richtung der Kugel (4) geneigt ist.

15. Fahrzeug (1) nach einem der Ansprüche 7 bis 14, **dadurch gekennzeichnet, dass** jedes Allseitenrad (9a, 9b, 9c, 10) über ein Getriebe (12a, 12b, 12c) und einen Elektromotor (11a, 11b, 11c, 11d) angetrieben ist und jeder Elektromotor (11a, 11b, 11c, 11d) auf dem Tragelement (3) befestigt ist.

16. Fahrzeug (1) nach einem der Ansprüche 1 bis 15, **dadurch gekennzeichnet, dass** an dem Tragelement (3) Kreisel (15a, 15b, 15c) angeordnet sind, die die Neigung und Neigungsrichtung des Tragelements (3) messen und die gemessene Neigung und Neigungsrichtung an die Steuerung (16) übergeben.

17. Fahrzeug (1) nach einem der Ansprüche 1 bis 16, **dadurch gekennzeichnet, dass** die Steuerung (16) ein Balance-Steuerungsmodul umfasst, das einen Fahrer (2) bei der Ausbalancierung des Tragelements (3) in einer horizontale Lage im Raum unterstützt.

## Claims

1. Vehicle (1) for the movement of a driver (2), comprising an element rolling on a ground surface (8), comprising a carrier element (3) unstably supported on the rolling element, a drive arrangement (5) which is supported by the carrier element (3) and drives the rolling element, and a control unit (16), by way of which the drive arrangement (5) is steered in a desired travel direction in dependence upon the inclination of the carrier element (3) and the inclination direction of the carrier element (3) wherein the vehicle (1) comprising the carrier element (3) is designed such that during the operation of the vehicle (1) the driver (2) stands freely and balancing on the carrier element (3), wherein the element rolling on the ground surface (8) is a ball (4), and by means of the drive arrangement (5) the vehicle can be moved in any desired travel directions and the driver (2) is in contact with the vehicle (1) exclusively by way of his feet and, as the case may be, additionally by way of his lower legs, **characterized in that** an opening (3b) is arranged in the carrier element (3) and the ball (4) protrudes into the opening (3b) in the carrier element (3).

2. Vehicle (1) as claimed in claim 1, **characterised in that** the vehicle (1) does not have a holding grip for the driver (2).

3. Vehicle (1) as claimed in claim 1 or 2, **characterised in that** the carrier element (3) is designed as an annular disk (3a) and the carrier element (3) has a circular, oval or rectangular edge (3c) or combinations thereof.

4. Vehicle (1) as claimed in claim 3, **characterised in that** the annular disk (3a) of the carrier element (3) is arranged in the region of the height of a horizontal equator (4a) of the ball (4).

5. Vehicle (1) as claimed in any one of claims 1 to 2, **characterised in that** the carrier element (3) is in the shape of a trapezoidal sheet as seen in the forwards travel direction of the vehicle (1).

6. Vehicle (1) as claimed in any one of claims 1 to 5, **characterised in that** standing surfaces (7) for the driver (2) are arranged on the carrier element (3) and the standing surfaces (7) are arranged oppositely in relation to the ball (4).

7. Vehicle (1) as claimed in claim 6, **characterised in that** the standing surfaces (7) for the driver (2) are arranged in the region of the height of a horizontal equator (4a) of the ball (4).

8. Vehicle (1) as claimed in any one of claims 1 to 7, **characterised in that** the drive arrangement (5) is attached to the carrier element (3) and the drive arrangement (5) comprises at least two omni-wheels (9a, 9b, 9c) having an axis of rotation (9d, 9e, 9f) for transmitting the driving forces to the ball (4).

9. Vehicle (1) as claimed in claim 8, **characterised in that** three omni-wheels (9a, 9b, 9c) are arranged on the carrier element (3) and are distributed uniformly around the ball (4).

10. Vehicle (1) as claimed in claim 8, **characterised in that** the axis of rotation (9d, 9e, 9f) is oriented in parallel with the carrier element (3).

11. Vehicle (1) as claimed in any one of claims 1 to 10, **characterised in that** the drive arrangement (5) comprises at least one omni-wheel (10a, 10b) having an axis of rotation (10c, 10d), the axis of rotation (10c, 10d) thereof being in parallel with the vertical axis (z) of the ball (4) when the carrier element (3) is horizontally oriented and the at least one omni-wheel (10a, 10b) acts upon the ball (4) at the height of a horizontal equator (4a).

12. Vehicle (1) as claimed in claim 11, **characterised in that** the drive arrangement (5) comprises a fourth omni-wheel (10a) and a fifth omni-wheel (10b) which are arranged on the carrier element (3) oppositely in relation to the ball (4).

13. Vehicle (1) as claimed in claim 12, **characterised in that** during a movement of the vehicle (1) in the forwards travel direction (V) the fourth omni-wheel (10a) and the fifth omni-wheel (10b) act upon the ball (4) in the region of a roll axis.

14. Vehicle (1) as claimed in claim 8 or 9, **characterised in that** at least one of the axes of rotation (9d, 9e, 9f) is inclined proceeding from a vertical position in the direction of the ball (4).

15. Vehicle (1) as claimed in any one of claims 7 to 14, **characterised in that** each omni-wheel (9a, 9b, 9c, 10) is driven by means of a transmission (12a, 12b, 12c) and an electric motor (11a, 11b, 11c, 11d) and each electric motor (11a, 11b, 11c, 11d) is attached to the carrier element (3).

16. Vehicle (1) as claimed in any one of claims 1 to 15, **characterised in that** gyroscopes (15a, 15b, 15c) are arranged on the carrier element (3) and measure the inclination and inclination direction of the carrier element (3) and transmit the measured inclination and inclination direction to the control unit (16).

17. Vehicle (1) as claimed in any one of claims 1 to 16, **characterised in that** the control unit (16) comprises a balance-control module which assists a driver (2) in balancing the carrier element (3) in a horizontal position in space.

## Revendications

1. Véhicule (1), destiné au déplacement d'un conducteur (2), comprenant un élément roulant sur un sol (8), un élément de support (3) en appui de manière instable sur l'élément roulant, un dispositif d'entraînement (5) en appui sur l'élément de support (3) et entraînant l'élément roulant et un dispositif de commande (16) permettant de commander, par le dispositif d'entraînement (5) en fonction de l'inclinaison de l'élément de support (3) et du sens d'inclinaison de l'élément de support (3) dans une direction de roulement souhaitée, le véhicule (1) pourvu de l'élément de support (3) et qui est formé de telle sorte que le conducteur (2) soit libre et se tienne en équilibre sur l'élément de support (3) pendant le fonctionnement du véhicule (1), l'élément roulant sur le sol (8) étant une boule (4) et le véhicule étant mobile dans n'importe quelle direction de déplacement par le biais du dispositif d'entraînement (5) et le conducteur (2) étant en contact avec le véhicule (1) exclusivement par ses pieds et éventuellement en plus par la partie inférieure de sa jambe, **caractérisé en ce qu'**une ouverture (3b) est ménagée dans l'élément de support (3) et la boule (4) fait saillie dans l'ouverture (3b) de l'élément de support (3).

2. Véhicule (1) selon la revendication 1, **caractérisé en ce que** le véhicule (1) est dépourvu de poignées de retenue destinées au conducteur (2).

3. Véhicule (1) selon la revendication 1 ou 2, **caractérisé en ce que** l'élément de support (3) est réalisé sous la forme d'un disque annulaire (3a) et l'élément de support (3) comporte un bord (3c) de forme circulaire, ovale ou rectangulaire ou des combinaisons de tels bords.

4. Véhicule (1) selon la revendication 3, **caractérisé en ce que** le disque annulaire (3a) de l'élément de support (3) est disposé au niveau de la hauteur d'un équateur horizontal (4a) de la boule (4).

5. Véhicule (1) selon l'une des revendications 1 à 2, **caractérisé en ce que** l'élément de support (3) a une forme trapézoïdale lorsque l'on regarde dans le sens d'avancement du véhicule (1).

6. Véhicule (1) selon l'une des revendications 1 à 5, **caractérisé en ce que** des surfaces d'appui (7) destinées au conducteur (2) sont disposées sur l'élément de support (3) et les surfaces d'appui (7) sont disposées l'une en face de l'autre par rapport à la boule (4).

7. Véhicule (1) selon la revendication 6, **caractérisé en ce que** les surfaces d'appui (7) destinées au conducteur (2) sont disposées au niveau de la hauteur d'un équateur horizontal (4a) de la boule (4).

8. Véhicule (1) selon l'une quelconque des revendications 1 à 7, **caractérisé en ce que** le dispositif d'entraînement (5) est fixé à l'élément de support (3) et le dispositif d'entraînement (5) comporte au moins deux roues holonomes (9a, 9b, 9c) munies d'un axe de rotation (9d, 9e, 9f) pour transmettre les forces d'entraînement à la boule (4).

9. Véhicule (1) selon la revendication 8, **caractérisé en ce que** trois roues holonomes (9a, 9b, 9c) sont disposées sur l'élément de support (3) et sont réparties régulièrement autour de la boule (4).

10. Véhicule (1) selon la revendication 8, **caractérisé en ce que** l'axe de rotation (9d, 9e, 9f) est orienté parallèlement à l'élément de support (3).

11. Véhicule (1) selon l'une des revendications 1 à 10, **caractérisé en ce que** le dispositif d'entraînement (5) comprend au moins une roue holonome (10a, 10b) pourvue d'un axe de rotation (10c, 10d), **en ce que** l'axe de rotation (10c, 10d) est parallèle à l'axe vertical (z) de la boule (4) lorsque l'élément de support (3) est orienté horizontalement et l'au moins une roue holonome (10a, 10b) s'engage avec la boule (4) à la hauteur d'un équateur horizontal (4a).

12. Véhicule (1) selon la revendication 11, **caractérisé en ce que** le dispositif d'entraînement (5) comprend une quatrième roue holonome (10a) et une cinquième roue holonome (10b) qui sont disposées sur l'élément de support (3) en face l'une de l'autre par rapport à la boule (4).

13. Véhicule (1) selon la revendication 12, **caractérisé en ce que**, lorsque le véhicule (1) se déplace dans le sens d'avancement (V), la quatrième roue holonome (10a) et la cinquième roue holonome (10b) s'engagent avec la boule (4) au niveau d'un axe de roulement.

14. Véhicule (1) selon la revendication 8 ou 9, **caractérisé en ce qu'**au moins un des axes de rotation (9d, 9e, 9f), est incliné en direction de la boule (4) depuis une position verticale.

15. Véhicule (1) selon l'une des revendications 7 à 14, **caractérisé en ce que** chaque roue holonome (9a, 9b, 9c, 10) est entraînée par une transmission (12a, 12b, 12c) et un moteur électrique (11a, 11b, 11c, 11d) et chaque moteur électrique (11a, 11b, 11c, 11d) est monté sur l'élément de support (3).

16. Véhicule (1) selon l'une des revendications 1 à 15, **caractérisé en ce que** des toupies (15a, 15b, 15c) sont disposées sur l'élément de support (3), lesquelles toupies mesurent l'inclinaison et le sens d'inclinaison de l'élément de support (3) et transmettent l'inclinaison et le sens d'inclinaison mesurés au dispositif de commande (16).

17. Véhicule (1) selon l'une des revendications 1 à 16, **caractérisé en ce que** le dispositif de commande (16) comporte un module de commande d'équilibrage qui supporte un conducteur (2) dans une position horizontale dans l'espace en cas de l'équilibrage de l'élément support (3).
